# EUROPEAN PATENT SPECIFICATION

(11) **EP 4 309 064 B1**
(45) Date of publication and mention of the grant of the patent: **27.05.2026**
(21) Application number: 22714144.7
(22) Date of filing: 09.03.2022
(51) Int. Cl.: G06F 21/62, H04L 41/0897, G06F 9/455

(54) **SECURE ERASURE AND REPLACEMENT OF VIRTUAL MACHINE POOLS**
SICHERE LÖSCHUNG UND ERSETZUNG VON VIRTUELLEN MASCHINENPOOLS
EFFACEMENT ET REMPLACEMENT SÉCURISÉS DE GROUPES DE MACHINES VIRTUELLES

(30) Priority: 15.03.2021 GB 202103557
(43) Date of publication of application: 24.01.2024
(73) Proprietor: Blancco Technology Group IP Oy, 80110 Joensuu (FI)
(72) Inventor: BRUSECKE, Henrik, 80110 Joensuu (FI)
(74) Representative: Marks & Clerk LLP
(86) International application number: PCT/EP2022/056028
(87) International publication number: WO 2022/194636

(56) References cited:
- US-A1- 2011 055 588
- US-A1- 2019 227 730
- US-A1- 2020 034 543

## Description

### FIELD

The present disclosure relates to a method and apparatus for securely erasing and replacing a pool of virtual machines and in particular, though not exclusively, to a method and apparatus for securely erasing and replacing a pool of virtual desktops.

### BACKGROUND

A virtual machine is a software implementation of a computing environment in which a guest operating system (OS) is installed and run on physical hardware. A virtual machine typically emulates a physical computing environment, wherein requests for a central processing unit (CPU), memory, hard disk drive, network interface card, and other hardware resources are managed by a virtualisation layer that translates these requests to the underlying physical hardware such as the underlying physical hardware of a host machine. Moreover, it is known to run a plurality of virtual machines on the same virtualisation layer, wherein the plurality of virtual machines share some of the same virtualized resources, thus forming a virtual machine pool. As such, a virtual machine pool may be considered to be a plurality of virtual machines, wherein each virtual machine in the virtual machine pool is configured to have the same settings and features as each of the other virtual machines in the virtual machine pool.

For example, a virtual machine may take the form of a virtual desktop which is, in effect, a guest OS running on top of a virtualisation layer that separates the desktop environment and associated application software from the physical host machine that is used to access it. As will be appreciated by one of ordinary skill in the art, virtual desktops can be used in conjunction with application virtualisation and user profile management systems to provide a comprehensive desktop environment management system. Moreover, it is known to run a plurality of virtual desktops on the same virtualisation layer, wherein the plurality of virtual desktops share some of the same virtualized resources, thus forming a virtual desktop pool. As such, a virtual desktop pool may be considered to be a plurality of virtual desktops, wherein each virtual desktop in the virtual desktop pool is configured to have the same settings and features as each of the other virtual desktops in the virtual desktop pool. The virtual desktops of the virtual desktop pool may be managed collectively using a virtual desktop management application or virtual desktop infrastructure (VDI) software such as VMware Horizon (RTM) for controlling the allocation of resources based on current demand etc. Pooling virtual desktops in this way makes it easier to configure desktop settings and centralises the management of the virtual desktops. This may allow delivery of identical applications to a group of users. This may also facilitate automatic virtual desktop provisioning. Pooling virtual desktops also makes patching and updating desktops easier because any patches or updates may be applied to all of the virtual desktops in the pool at the same time.

Each virtual machine of the pool of virtual machines may contain the same type of user-generated data as non-virtualized machines. Such data may include sensitive information, such as personally identifiable information (Pll), confidential messages or trade secrets, for example. A consequent problem with virtual machine pools and virtual desktop pools is that it may be difficult to erase and replace each virtual machine of a virtual machine pool securely or robustly enough for some applications or for compliance with some security standards or to erase and replace each virtual desktop of a virtual desktop pool securely or robustly enough for some applications or for compliance with some security standards.

US 2019/227730 A1 discloses a method of erasing a cloud host in a cloud-computing environment which includes: receiving a cloud host secure erasing request; generating an erase instruction according to the request; and sending the erase instruction to a secure erasing server, such that the secure erasing server calls a secure erasing daemon process on the corresponding host machine according to the erase instruction, and erases the cloud host to be erased on the host machine via the secure erasing daemon process.

US 2011/055588 A1 discloses that when terminating a process instantiated in a cloud, a cloud management system can provide and interact with an eraser agent on the computing systems supporting the process. The process can be any type of process that can exist in the cloud such a virtual machine, software appliance, or software instance. The eraser agent can execute on the computing systems to erase information stored on physical storage devices of the computing systems and associated with the process. In particular, the eraser agent can utilize secure algorithms to alter and obscure the information stored on the physical storage devices of the computing systems and associated with the process.

US 2020/034543 A1 discloses techniques for configurable compute instance resets. A user can issue a request to securely reset one or more compute instances implemented within a service provider system. Each compute instance is reset to a previous point in time, such that any activity of the compute instance or effects thereof occurring since that point in time are completely eliminated. Each compute instance reset can include removing an existing volume of the compute instance, obtaining a volume, attaching the obtained volume to the compute instance, and rebooting the compute instance. Configuration data of the compute instance, such as an instance identifier or network addresses, can be maintained after the reset.

### SUMMARY

According to an aspect of the present disclosure there is provided a method for securely erasing and replacing a pool of virtual machines, wherein the virtual machines of the pool of virtual machines are implemented on a common virtualization layer and are managed by a common virtual machine management application, and wherein the method comprises:
using the virtual machine management application to create a replacement pool of virtual machines on the common virtualization layer, wherein the replacement pool of virtual machines has the same configuration and/or settings as the pool of virtual machines;
using an erasure application to erase each virtual machine of the pool of virtual machines, wherein the erasure application is executable independently of the virtual machine management application; and
using the virtual machine management application to delete the pool of virtual machines.

Using the erasure application to erase each virtual machine of the pool of virtual machines may comprise erasing at least one of the following entities associated with each virtual machine of the pool of virtual machines: one or more guest operating systems; one or more system files; one or more applications; or stored data.

Using the erasure application to erase each virtual machine of the pool of virtual machines may comprise erasing stored data associated with each virtual machine of the pool of virtual machines and, in addition, erasing at least one of the following entities: one or more guest operating systems associated with each virtual machine of the pool of virtual machines, one or more system files associated with each virtual machine of the pool of virtual machines, or one or more applications associated with each virtual machine of the pool of virtual machines.

Using the erasure application to erase each virtual machine of the pool of virtual machines may comprise completely erasing each virtual machine of the pool of virtual machines.

Using an erasure application to erase each virtual machine of the pool of virtual machines, wherein the erasure application is executable independently of the virtual machine management application, may result in a more complete and/or a more secure erasure of each virtual machine of the pool of virtual machines than when using the virtual machine management application itself to erase each virtual machine of the pool of virtual machines because using the virtual machine management application itself to erase each virtual machine of the pool of virtual machines may result in the virtual machine management application only marking files associated with each virtual machine as deleted or hide the files from the user interface such that the deleted or hidden files remain recoverable thereby enabling a user to recover the deleted or hidden files within a certain period of time. Using the erasure application to erase each virtual machine of the pool of virtual machines may result in the erasure application overwriting the contents of the files associated with each virtual machine of the pool of virtual machines. Specifically, the erasure application may overwrite virtualized hard disks or storage volumes associated with each virtual machine. Alternatively, or in addition, the erasure application may change the encryption key of encrypted virtualized hard disks or storage volumes associated with each virtual machine.

Using the erasure application to erase each virtual machine of the pool of virtual machines may comprise generating an erasure verification report containing data indicative of the degree, extent and/or successful completion, of the erasure of each virtual machine of the pool of virtual machines once the erasure application has erased each virtual machine of the pool of virtual machines. Using the erasure application to erase each virtual machine of the pool of virtual machines may allow verification of erasure. For example, the erasure application may be configured to produce an erasure verification report at the end of the erasure process.

However, the erasure application may not be supported by, or may be incompatible with, the virtual machine management application, for example because the erasure application is provided by a third party supplier, with the result that using the erasure application to erase each virtual machine of the pool of virtual machines may cause the pool of virtual machines to enter into an error state which is unrecoverable and which may prevent the virtual machine management application from continuing to manage the pool of virtual machines and/or which may prevent use of the virtual machines in the pool of virtual machines. Consequently, such a method may, in effect, allow the secure erasure and replacement of each virtual machine of the pool of virtual machines by using the virtual machine management application to create the replacement pool of virtual machines in place of the pool of virtual machines, wherein the replacement pool of virtual machines has the same configuration and/or settings as the pool of virtual machines, before using the erasure application to erase each virtual machine of the pool of virtual machines, wherein the erasure application is executable independently of the virtual machine management application. The virtual machine management application can then delete the pool of virtual machines after the pool of virtual machines has entered into the unrecoverable error state. The replacement pool of virtual machines may be created readily by the virtual machine management application. In effect, the method may result in the erasure and replacement of the pool of virtual machines in a way which is not only secure and robust, but which is also automatic and seamless to a user. Although it may take longer to erase the pool of virtual machines using the independently executable erasure application compared with the virtual machine management application, erasing and replacing the pool of virtual machines may be performed in an automated fashion as part of the method.

Using the virtual machine management application to create the replacement pool of virtual machines on the common virtualization layer may comprise using the virtual machine management application to duplicate the pool of virtual machines on the common virtualization layer. Such a duplicated pool of virtual machines may have the same configuration and/or settings as the pool of virtual machines, but none of the user-generated data that the pool of virtual machines may contain.

Using the virtual machine management application to create the replacement pool of virtual machines on the common virtualization layer may comprise:
storing the configuration and/or settings of the pool of virtual machines at a first time; and
using the virtual machine management application to create the replacement pool of virtual machines on the common virtualization layer with the same configuration and/or settings as the pool of virtual machines at a second time which is later than the first time.

The method may comprise using the virtual machine management application to disable or suspend the operation of the pool of virtual machines before using the erasure application to erase each virtual machine of the pool of virtual machines.

Using the virtual machine management application to disable or suspend the operation of the pool of virtual machines before using the erasure application to erase each virtual machine of the pool of virtual machines may make the method of securely erasing and replacing the pool of virtual machines more reliable and safer. For example, it is possible that a user may attempt to log into a virtual machine during erasure of the virtual machine using the erasure application. Thus, using the virtual machine management application to disable or suspend the operation of the pool of virtual machines before using the erasure application to erase each virtual machine of the pool of virtual machines may avoid the possibility that a user may attempt to log into a virtual machine whilst the erasure application is erasing the virtual machine. Scenarios are also possible where the virtual machine management application creates new virtual machines after the erasure application has identified which virtual machines are present in the pool of virtual machines. Consequently, using the virtual machine management application to disable or suspend the operation of the pool of virtual machines before using the erasure application to erase each virtual machine of the pool of virtual machines may prevent the virtual machine management application from creating any new virtual machines whilst the erasure application is erasing each virtual machine of the pool of virtual machines. This means that the erasure application can identify with certainty which virtual machines are part of the pool of virtual machines to be erased.

The method may comprise using the virtual machine management application to disable or suspend the operation of the pool of virtual machines before using the virtual machine management application to create the replacement pool of virtual machines on the common virtualization layer.

Using the virtual machine management application to disable or suspend the operation of the pool of virtual machines before using the virtual machine management application to create the replacement pool of virtual machines on the common virtualization layer may mean that the virtual machine management application creates the replacement pool of virtual machines on the common virtualization layer in a disabled or suspended state.

The method may comprise enabling or initiating the operation of the replacement pool of virtual machines.

The method may comprise enabling or initiating the operation of the replacement pool of virtual machines before or after using the virtual machine management application to delete the pool of virtual machines.

The method may comprise enabling or initiating the operation of the replacement pool of virtual machines before or after using the erasure application to erase the pool of virtual machines.

The pool of virtual machines may comprise a pool of virtual desktops and the virtual machine management application may comprise a virtual desktop management application or virtual desktop infrastructure (VDI) software.

The virtual machine management application may comprise VMware Horizon (RTM).

The method may be defined by a VMware Orchestrator workflow. An Orchestrator workflow may be considered to be an automated task scripted in a VMware specific language. The VMware Orchestrator workflow may call the virtual machine management application to create the replacement pool of virtual machines on the common virtualization layer. The VMware Orchestrator workflow may call the erasure application to erase each virtual machine of the pool of virtual machines.

The method may be initiated, invoked or triggered via a VMware Horizon (RTM) graphical user interface.

The method may comprise executing the virtual machine management application and the erasure application using the same processing resource or using different processing resources. The method may comprise executing the virtual machine management application and the erasure application using the same computer or using physically different computers.

According to an aspect of the present disclosure there is provided a computer program which, when executed by a processing resource of a data eraser apparatus, causes the data eraser apparatus to perform any of the methods for securely erasing and replacing a pool of virtual machines described above.

The pool of virtual machines may comprise a pool of virtual desktops and the virtual machine management application may comprise a virtual desktop management application or virtual desktop infrastructure (VDI) software.

The virtual machine management application or virtual desktop infrastructure (VDI) software may comprise VMware Horizon (RTM).

The computer program may comprise, or be, a VMware Orchestrator workflow. An Orchestrator workflow may be considered to be an automated task scripted in a VMware specific language. The VMware Orchestrator workflow may call the virtual machine management application to create the replacement pool of virtual machines on the common virtualization layer. The VMware Orchestrator workflow may call the erasure application to erase each virtual machine of the pool of virtual machines.

The computer program may be initiated, invoked or triggered via a graphical user interface associated with the VMware Horizon (RTM) (VDI) software.

The virtual machine management application and the erasure application may be executed by the processing resource. For example, the virtual machine management application and the erasure application may be executed by the same computer.

Alternatively, the virtual machine management application may be executed by the processing resource and the erasure application may be executed by a further different processing resource. For example, the virtual machine management application and the erasure application may be executed by physically different computers.

According to an aspect of the present disclosure there is provided a data eraser apparatus for securely erasing and replacing a pool of virtual machines, wherein the data eraser apparatus is configured to perform any of the methods for securely erasing and replacing a pool of virtual machines described above.

The data eraser apparatus may comprise a processing resource which is configured to execute a computer program so as to cause the data eraser apparatus to perform any of the methods for securely erasing and replacing a pool of virtual machines described above.

The pool of virtual machines may comprise a pool of virtual desktops and the virtual machine management application may comprise a virtual desktop management application or virtual desktop infrastructure (VDI) software.

The virtual machine management application may comprise VMware Horizon (RTM).

The computer program may comprise, or be, a VMware Orchestrator workflow. An Orchestrator workflow may be considered to be an automated task scripted in a VMware specific language. The VMware Orchestrator workflow may call the virtual machine management application to duplicate the pool of virtual machines. The VMware Orchestrator workflow may call the erasure application.

The computer program may be initiated, invoked or triggered via a graphical user interface associated with the VMware Horizon (RTM) (VDI) software.

The virtual machine management application and the erasure application may be executed by the processing resource. For example, the virtual machine management application and the erasure application may be executed by the same computer.

Alternatively, the virtual machine management application may be executed by the processing resource and the erasure application may be executed by a further processing resource. For example, the virtual machine management application and the erasure application may be executed by physically different computers.

It should be understood that any one or more of the features of any one of the foregoing aspects of the present disclosure may be combined with any one or more of the features of any of the other foregoing aspects of the present disclosure.

### BRIEF DESCRIPTION OF THE DRAWINGS

Methods and a data eraser apparatus for securely erasing and replacing a pool of virtual machines will now be described by way of non-limiting example only with reference to the accompanying drawings of which:
FIG. 1 is a schematic of a pool of virtual machines and a data eraser apparatus for securely erasing and replacing the pool of virtual machines;
FIG. 2 is a flow chart illustrating a method for securely erasing and replacing the pool of virtual machines;
FIG. 3 is a flow chart illustrating a method for securely erasing and replacing a pool of virtual machines in the form of a pool of virtual desktops;
FIG. 4 is a screenshot illustrating the erasure of data from the pool of virtual desktops using a erasure application;
FIG. 5 is a screenshot of a graphical user interface of a virtual machine management application in the form of VMware Horizon (RTM) virtual desktop infrastructure (VDI) software after erasure of data from the pool of virtual desktops using the erasure application;
FIG. 6 is a screenshot of the graphical interface of the VDI software of FIG. 5 showing the status of a pool of virtual desktops after erasure of data from the pool of virtual desktops using the erasure application showing error messages indicative that the pool of virtual desktops has entered an irrecoverable error state as a result of erasure of data from the pool of virtual desktops using the erasure application;
FIG. 7A is a first part of a listing of the configuration and settings of a pool of virtual desktops when using VMware Horizon (RTM) VDI software;
FIG. 7B is a second part of the listing of the configuration and settings of the pool of virtual desktops when using VMware Horizon (RTM) VDI software;
FIG. 7C is a third part of the listing of the configuration and settings of the pool of virtual desktops when using VMware Horizon (RTM) VDI software; and
FIG. 7D is a fourth part of the listing of the configuration and settings of the pool of virtual desktops when using VMware Horizon (RTM) VDI software.

### DETAILED DESCRIPTION OF THE DRAWINGS

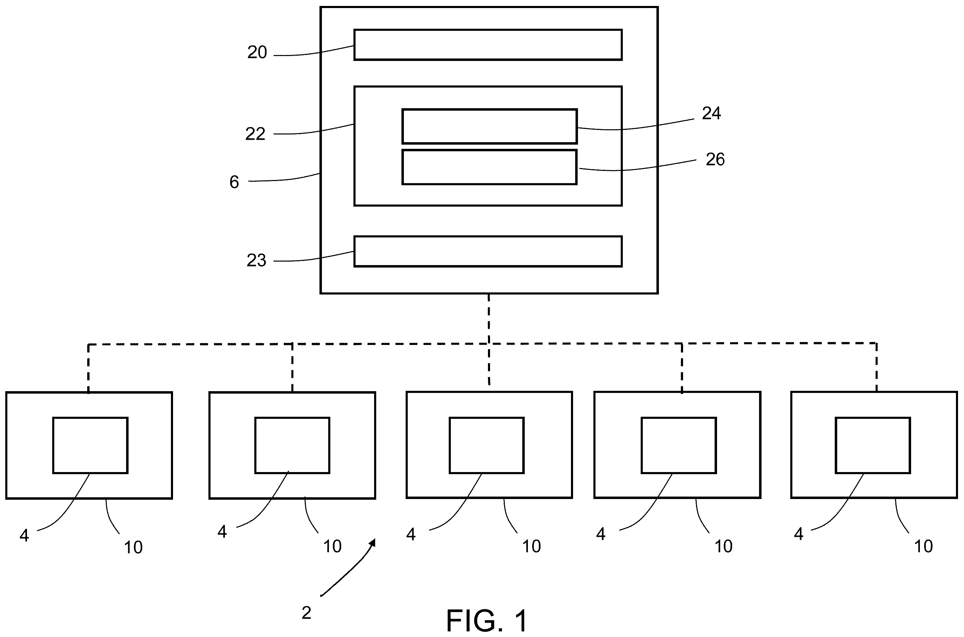

Referring initially to FIG. 1, there is shown a pool 2 of virtual machines 4 such as virtual desktops and a data eraser apparatus 6 for securely erasing and replacing the pool 2 of virtual machines 4. The virtual machines 4 of the pool 2 of virtual machines 4 are implemented on a common virtualization layer. Each virtual machine 4 of the pool 2 of virtual machines 4 is hosted on a corresponding physical host machine 10. However, one of ordinary skill in the art will understand that this need not be the case and that one or more of the virtual machines 4 of the pool 2 of virtual machines 4 may be hosted on the same physical host machine. As indicated by the dashed lines in FIG. 1, the data eraser apparatus 6 and the host machines 10 are configured to permit communication between the data eraser apparatus 6 and each host machine 10.

The data eraser apparatus 6 includes a processing resource 20, a memory 22 and a user interface 23. The memory 22 stores a virtual machine management application 24. The erasure application 26 is executable independently of the virtual machine management application 24 in the sense that the processing resource 20 is capable of executing the virtual machine management application 24 and the erasure application 26 independently of one another. The virtual machine management application 24 does not however support, or is incompatible with the use of, the erasure application 26, for example because the erasure application 26 is provided by a third party supplier with the result that using the erasure application 26 to erase each virtual machine 4 of the pool 2 of virtual machines 4 may cause the pool 2 of virtual machines 4 to enter into an error state which is unrecoverable and which may prevent the virtual machine management application 24 from continuing to manage the pool 2 of virtual machines 4 and/or which may prevent use of the virtual machines 4 in the pool 2 of virtual machines 4.

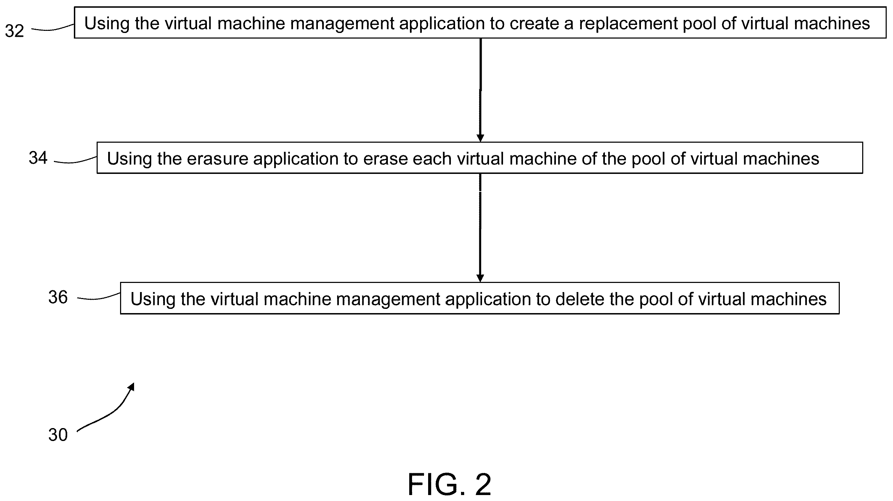

FIG. 2 illustrates a first method 30 for securely erasing and replacing the pool 2 of virtual machines 4. The method 30 is manually triggered by a user via the user interface 23 and, once initiated, the steps of the method 30 are performed in software without any further user interaction. Once the method 30 is initiated, the processing resource 20 executes the virtual machine management application 24 and the erasure application 26 to thereby cause the data eraser apparatus 6 to perform the method 30.

Specifically, the virtual machine management application 24 creates a replacement pool of virtual machines (not shown) on the common virtualization layer at step 32, wherein the replacement pool of virtual machines has the same configuration and/or settings as the pool 2 of virtual machines 4. The erasure application 26 then erases each virtual machine 4 of the pool 2 of virtual machines 4 at step 34. Specifically, the erasure application 26 erases at least one of the following entities associated with each virtual machine 4 of the pool 2 of virtual machines 4: one or more guest operating systems; one or more system files; one or more applications; or stored data. For example, the erasure application 26 erases stored data associated with each virtual machine 4 of the pool 2 of virtual machines 4 and, in addition, to erase at least one of the following entities: one or more guest operating systems associated with each virtual machine 4 of the pool 2 of virtual machines 4, one or more system files associated with each virtual machine 4 of the pool 2 of virtual machines 4, or one or more applications associated with each virtual machine 4 of the pool 2 of virtual machines 4.

Once the pool 2 of virtual machines 4 has been erased, the virtual machine management application 24 deletes the pool 2 of virtual machines 4 at step 36.

Using the erasure application 26 to erase each virtual machine 4 of the pool 2 of virtual machines 4, wherein the erasure application 26 is executable independently of the virtual machine management application 24, may result in a more complete and/or a more secure erasure of each virtual machine 4 of the pool 2 of virtual machines 4 than when using the virtual machine management application 24 itself to erase each virtual machine 4 of the pool 2 of virtual machines 4. However, the erasure application 26 may not be supported by, or may be incompatible with, the virtual machine management application 24, for example because the erasure application 26 is provided by a third party supplier, with the result that using the erasure application 26 to erase each virtual machine 4 of the pool 2 of virtual machines 4 may cause the pool 2 of virtual machines 4 to enter into an error state which is unrecoverable and which may prevent the virtual machine management application 24 from continuing to manage the pool 2 of virtual machines 4 and/or which may prevent use of the virtual machines 4 in the pool 2 of virtual machines 4. Consequently, such a method may, in effect, allow the secure erasure of each virtual machine 4 of the pool 2 of virtual machines 4 using the erasure application 26, wherein the erasure application 26 is executable independently of the virtual machine management application 24 even when the erasure application 26 is not supported by, or is incompatible with, the virtual machine management application 24.

In view of the foregoing, one of skill in the art will understand that the method 30 described with reference to FIG. 2, not only results in the secure erasure of the pool 2 of virtual machines 4, but also results in the creation of a replacement pool of virtual machines in place of the pool 2 of virtual machines 4, wherein the replacement pool of virtual machines has the same configuration and/or settings as the pool 2 of virtual machines 4. The method 30 may mean that a user can have confidence that the original pool 2 of virtual machines 4 may be erased securely without the risk that the replacement pool 2 of virtual machines 4 is in an error state. The method 30 may also at least partially reduce the manual effort required to manually generate a replacement pool of virtual machines with the same configurations and/or settings as the original pool 2 of virtual machines 4. Generating the replacement pool of virtual machines may also be important in many real-world scenarios where there is a requirement for the secure erasure of the original virtual machines but where the original virtual machines need to be replaced with new virtual machines. For example, this may be advantageous for a business that requires every employee to have a fresh virtual machine in the morning and that requires each used virtual machine to be securely erased in the evening when the employees go home.

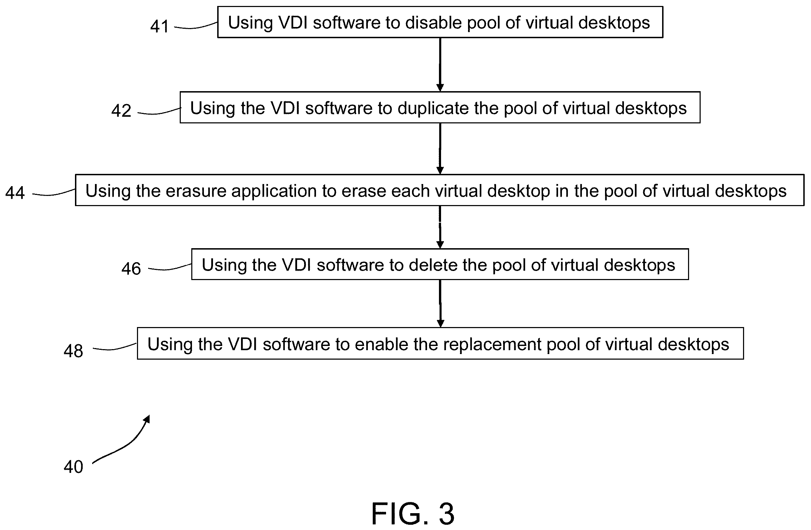

FIG. 3 illustrates a second method 40 for securely erasing and replacing the pool 2 of virtual machines 4. In the method 40 of FIG. 3, each virtual machine 4 of the pool 2 of virtual machines 4 takes the form of a virtual desktop, and the virtual machine management application 24 takes the form of virtual desktop infrastructure (VDI) software such as VMware Horizon (RTM).

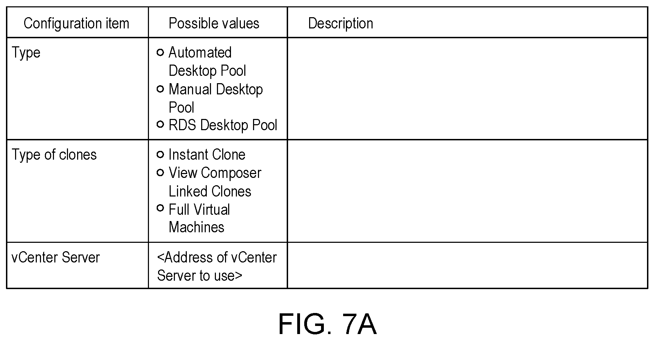

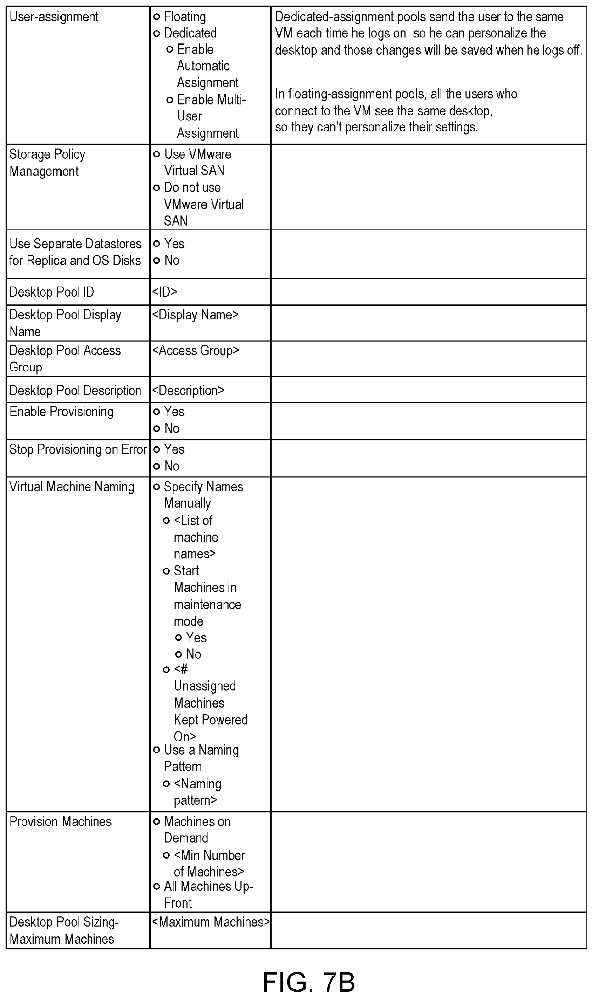

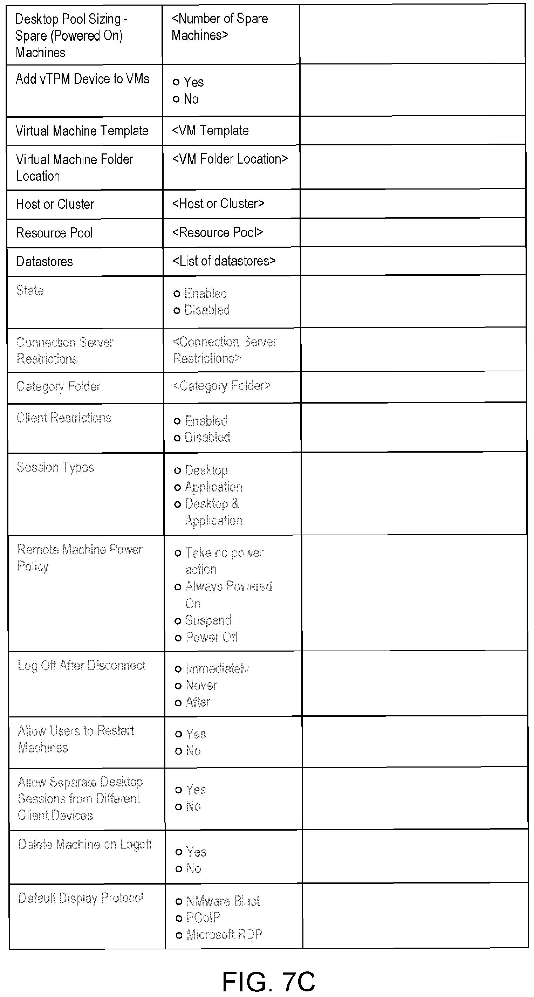

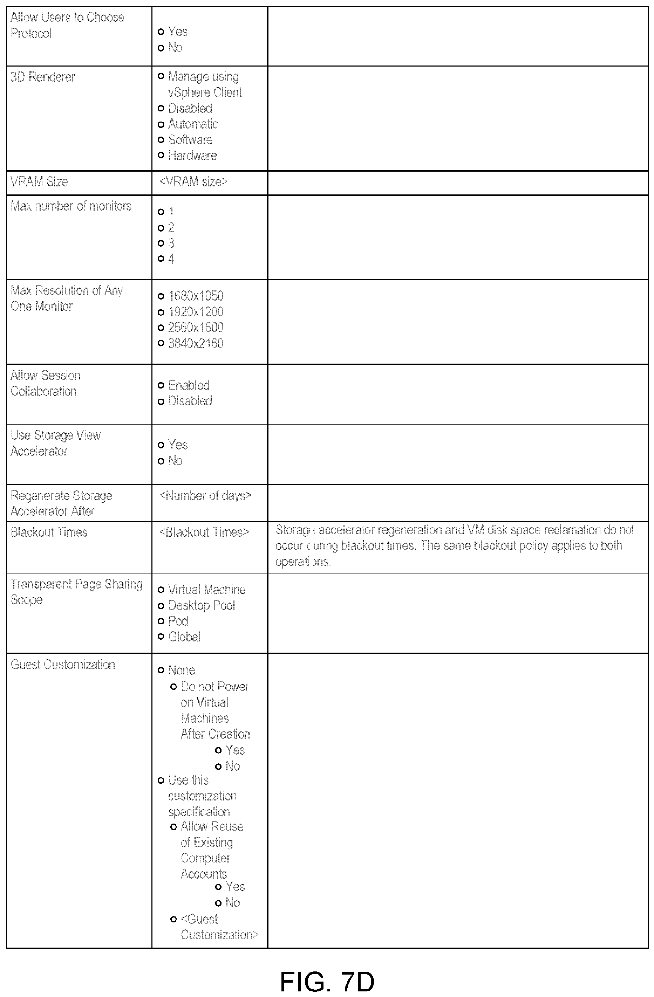

The method 40 begins with a user manually disabling the pool 2 of virtual desktops 4 at step 41 via a graphical user interface associated with the VMware Horizon (RTM) VDI software 24. At step 42, the user manually triggers a VMware Orchestrator workflow via the graphical user interface associated with the VMware Horizon (RTM) VDI software 24, wherein the VMware Orchestrator workflow defines steps 42, 44, and 46 of the method 40. As will be appreciated by one of ordinary skill in the art, the VMware Orchestrator workflow may be considered to be an automated task scripted in a VMware specific language. Once the VMware Orchestrator workflow is manually triggered by a user at step 42, steps 42, 44, and 46 of the method 40 are performed automatically as defined by the VMware Orchestrator workflow thereby causing the processing resource 20 to execute steps 42, 44, and 46 of the method 40 automatically without any further user interaction. Specifically, once the VMware Orchestrator workflow is manually triggered by a user at step 42, the VDI software 24 creates a replacement pool of virtual desktops (not shown) on the common virtualization layer to duplicate the pool 2 of virtual desktops 4 so that the replacement pool of virtual desktops has the same configuration and/or settings as the pool 2 of virtual desktops 4. A listing of the configuration and/or settings of the pool 2 of virtual desktops 4 when using the VMware Horizon (RTM) VDI software 24 is provided in FIGS. 7A to 7B. By disabling or suspending the operation of the pool 2 of virtual desktops 4 at step 41 before creating the replacement pool of virtual desktops on the common virtualization layer at step 42, the replacement pool of virtual desktops is created on the common virtualization layer in a disabled or suspended state with the same configuration and/or settings as the pool 2 of virtual desktops 4.

The VDI software 24 then calls the erasure application 26 to erase each virtual desktop 4 of the pool 2 of virtual desktops 4 at step 44. Specifically, the erasure application 26 erases at least one of the following entities associated with each virtual desktop 4 of the pool 2 of virtual desktops 4: one or more guest operating systems; one or more system files; one or more applications; or stored data. For example, the erasure application 26 erases stored data associated with each virtual desktop 4 of the pool 2 of virtual desktops 4 and, in addition, erases at least one of the following entities: one or more guest operating systems associated with each virtual desktop 4 of the pool 2 of virtual desktops 4, one or more system files associated with each virtual desktop 4 of the pool 2 of virtual desktops 4, or one or more applications associated with each virtual desktop 4 of the pool 2 of virtual desktops 4.

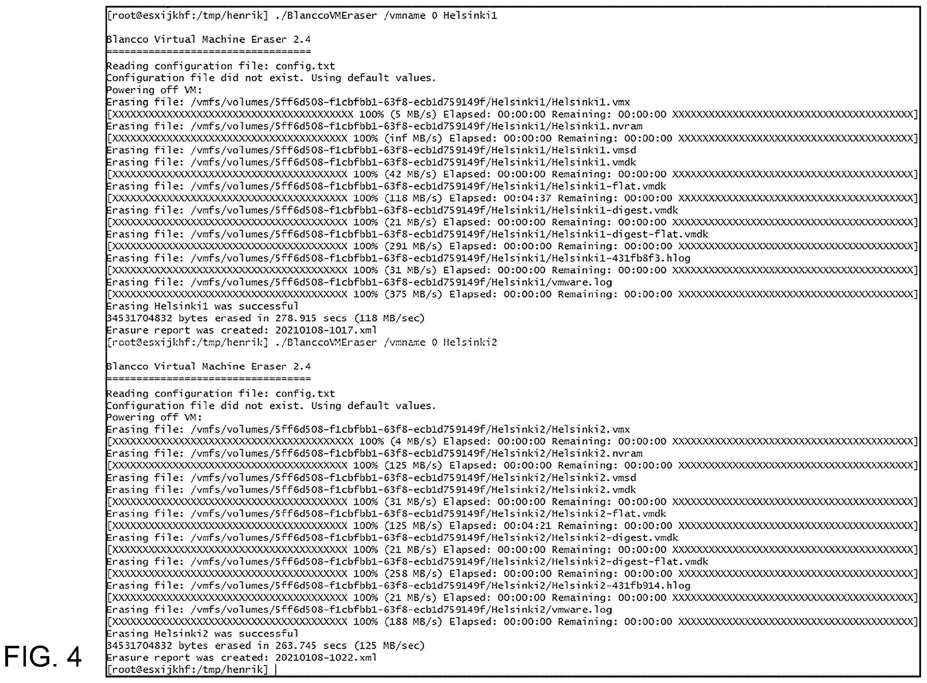

For example, FIG. 4 shows the progress of the erasure process performed by a third party erasure application 26 on two virtual desktops 4 named "Helsinki1" and "Helsinki2" of the pool 2 of virtual desktops 4 named "Helsinki", wherein Helsinki is managed by VDI software 24 in the form of VMware Horizon (RTM).

Referring back to FIG. 3, following erasure of the pool 2 of virtual desktops 4, the method 40 continues with the VDI software 24 deleting the pool 2 of virtual desktops 4 at step 46.

Since the replacement pool of virtual desktops are created on the common virtualization layer at step 42 in a disabled or suspended state, once the VMware Orchestrator workflow ends at step 46, the method 40 ends at step 48 with the user manually enabling the replacement pool of virtual desktops via the graphical user interface associated with the VMware Horizon (RTM) VDI software 24.

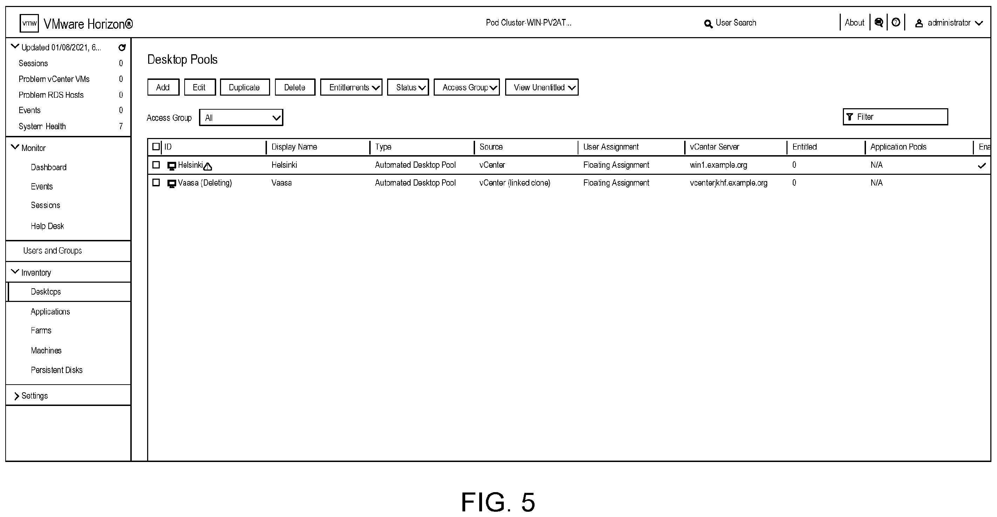

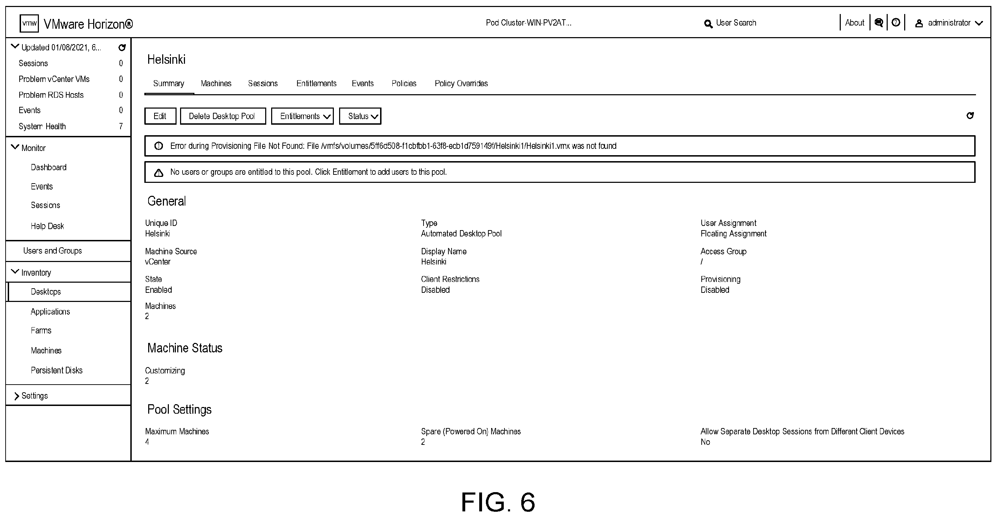

Using the erasure application 26 to erase each virtual desktop 4 of the pool 2 of virtual desktops 4, wherein the erasure application 26 is executable independently of the VDI software 24, may result in a more complete and/or a more secure erasure of each virtual desktop 4 of the pool 2 of virtual desktops 4 than when using the VDI software 24 itself to erase each virtual desktop 4 of the pool 2 of virtual desktops 4. However, the erasure application 26 may not be supported by, or may be incompatible with, the VDI software 24, for example because the erasure application 26 is provided by a third party supplier, with the result that using the erasure application 26 to erase each virtual desktop 4 of the pool 2 of virtual desktops 4 may cause the pool 2 of virtual desktops 4 to enter into an error state which is unrecoverable and which may prevent the VDI software 24 from continuing to manage the pool 2 of virtual desktops 4 and/or which may prevent use of the virtual desktops 4 in the pool 2 of virtual desktops 4. For example, FIG. 5 shows the VMware Horizon (RTM) desktop pools overview panel after completion of the data erasure process in which a waring symbol or icon appears adjacent to the icon for the Helsinki pool and FIG. 6 shows the overview panel for the Helsinki pool which appears after clicking or otherwise selecting the icon for the Helsinki pool in the VMware Horizon (RTM) desktop pools overview panel of FIG. 5. Specifically, FIG. 6 shows detailed error messages indicating that the Helsinki pool has entered into an error state which is unrecoverable. Consequently, the method 40 may, in effect, allow the secure erasure of each virtual desktop 4 of the pool 2 of virtual desktops 4 using the erasure application 26, wherein the erasure application 26 is executable independently of the VDI software 24 even when the erasure application 26 is not supported by, or is incompatible with, the VDI software 24.

Using the VDI software 24 to disable or suspend the operation of the pool 2 of virtual desktops 4 before using the erasure application 26 to erase each virtual desktop 4 of the pool 2 of virtual desktops 4 may make the method of securely erasing the pool 2 of virtual desktops 4 more reliable and safer. For example, it is possible that a user may attempt to log into a virtual desktop 4 during erasure of the virtual desktop 4 using the erasure application 26. Thus, using the VDI software 24 to disable or suspend the operation of the pool 2 of virtual desktops 4 before the erasure application 26 erases each virtual desktop 4 of the pool 2 of virtual desktops 4 may avoid the possibility that a user may attempt to log into a virtual desktop 4 whilst the erasure application 26 is erasing the virtual desktop 4. Scenarios are also possible where the VDI software 24 creates new virtual desktops 4 after the erasure application 26 has identified which virtual desktops 4 are present in the pool 2 of virtual desktops 4. Consequently, using the VDI software 24 to disable or suspend the operation of the pool 2 of virtual desktops 4 before the erasure application 26 erases each virtual desktop 4 of the pool 2 of virtual desktops 4 may prevent the VDI software 24 from creating any new virtual desktops 4 whilst the erasure application 26 is erasing each virtual desktop 4 of the pool 2 of virtual desktops 4. This means that the erasure application 26 can identify with certainty which virtual desktops 4 are part of the pool 2 of virtual desktops 4 to be erased.

In view of the foregoing, one of skill in the art will understand that the method 40 described with reference to FIGS. 3 to 6, not only results in the secure erasure of the pool 2 of virtual desktops 4, but also results in the creation of a replacement pool of virtual desktops in place of the pool 2 of virtual desktops 4, wherein the replacement pool of virtual desktops has the same configuration and/or settings as the pool 2 of virtual desktops 4. The method 40 may mean that a user can have confidence that the original pool 2 of virtual desktops 4 may be erased securely without the risk that the replacement pool of virtual desktops is in an error state. The method 40 may also at least partially reduce the manual effort required to manually generate the replacement pool of virtual desktops with the same configurations and/or settings as the original pool 2 of virtual desktops 4. Generating the replacement pool of virtual desktops may also be important in many real-world scenarios where there is a requirement for the secure erasure of virtual desktops but where the original virtual desktops need to be replaced with new virtual desktops. For example, this may be advantageous for a business that requires every employee to have a fresh virtual desktop in the morning and that requires each used virtual desktop to be securely erased in the evening when the employees go home.

One of skill in the art will also understand that various modifications are possible to the methods described above without departing from the scope of the present invention as defined by the appended claims. For example, using the virtual machine management application 24 to create the replacement pool of virtual machines on the common virtualization layer at step 32 of FIG. 2 may comprise storing the configuration and/or settings of the pool 2 of virtual machines 4 at a first time, and using the virtual machine management application 24 to create the replacement pool of virtual machines on the common virtualization layer with the same configuration and/or settings as the pool 2 of virtual machines 4 at a second time which is later than the first time. Similarly, using the VDI software 24 to duplicate the pool 2 of virtual desktops 4 on the common virtualization layer at step 42 may comprise storing the configuration and/or settings of the pool 2 of virtual machines 4 at a first time, and using the VDI software 24 to duplicate the pool 2 of virtual desktops 4 on the common virtualization layer with the same configuration and/or settings as the pool 2 of virtual machines 4 at a second time which is later than the first time.

One of ordinary skill in the art should understand that although the VDI software 24 and the erasure application 26 are described above as being stored in the memory 22 of the same data eraser apparatus 6 and as being executed by the processing resource 20 of the same data eraser apparatus 6, the VDI software 24 and the erasure application 26 may be stored in the memories of different apparatus and/or may be executed by the processing resources of different apparatus.

Each feature disclosed or illustrated in the present specification may be incorporated in any embodiment, either alone, or in any appropriate combination with any other feature disclosed in the present specification and/or illustrated in the accompanying drawings. In particular, one of ordinary skill in the art will understand that one or more of the features of any one of the embodiments of the present disclosure described above with reference to the drawings may produce effects or provide advantages when used in isolation from one or more of the other features of any of the embodiments of the present disclosure and that different combinations of the features are possible other than the specific combinations of the features of the embodiments of the present disclosure described above.

Use of the term "comprising" when used in relation to a feature of an embodiment of the present disclosure does not exclude other features or steps of the embodiment of the present disclosure. Use of the term "a" or "an" when used in relation to a feature of an embodiment of the present disclosure does not exclude the possibility that the embodiment may include a plurality of such features.

## Claims

1. A computer-implemented (30) for securely erasing and replacing a pool (2) of virtual machines (4), wherein the virtual machines (4) of the pool (2) of virtual machines (4) are implemented on a common virtualization layer and are managed by a common virtual machine management application (24), and wherein the method comprises:
using (32) the virtual machine management application (24) to create a replacement pool of virtual machines on the common virtualization layer, wherein the replacement pool of virtual machines has the same configuration and/or settings as the pool (2) of virtual machines (4);
using (34) an erasure application (26) to erase each virtual machine (4) of the pool (2) of virtual machines (4), wherein the erasure application (26) is executable independently of the virtual machine management application (24); and
using (36) the virtual machine management application (24) to delete the pool (2) of virtual machines (4).

2. The method (30) according to claim 1, wherein using (34) the erasure application (26) to erase each virtual machine (4) of the pool (2) of virtual machines (4) comprises erasing at least one of the following entities associated with each virtual machine (4) of the pool (2) of virtual machines (4): one or more guest operating systems; one or more system files; one or more applications; or stored data.

3. The method (30) according to claim 1 or 2, wherein using (34) the erasure application (26) to erase each virtual machine (4) of the pool (2) of virtual machines (4) comprises erasing stored data associated with each virtual machine (4) of the pool (2) of virtual machines (4) and, in addition, erasing at least one of the following entities: one or more guest operating systems associated with each virtual machine (4) of the pool (2) of virtual machines (4), one or more system files associated with each virtual machine (4) of the pool (2) of virtual machines (4), or one or more applications associated with each virtual machine (4) of the pool (2) of virtual machines (4).

4. The method (30) according to any preceding claim, wherein using (34) the erasure application (26) to erase each virtual machine (4) of the pool (2) of virtual machines (4) comprises generating an erasure verification report containing data indicative of the degree, extent and/or successful completion, of the erasure of each virtual machine (4) of the pool (2) of virtual machines (4) once erasure of each virtual machine (4) of the pool (2) of virtual machines (4) is completed.

5. The method (30) according to any preceding claim, wherein using (32) the virtual machine management application (24) to create the replacement pool of virtual machines on the common virtualization layer comprises using (32) the virtual machine management application (24) to duplicate the pool (2) of virtual machines (4) on the common virtualization layer.

6. The method (30) according to any one of claims 1 to 4, wherein using (32) the virtual machine management application (24) to create the replacement pool of virtual machines on the common virtualization layer comprises:
storing the configuration and/or settings of the pool (2) of virtual machines (4) at a first time; and
using the virtual machine management application (24) to create the replacement pool of virtual machines on the common virtualization layer with the same configuration and/or settings as the pool (2) of virtual machines (4) at a second time which is later than the first time.

7. The method (30) according to any preceding claim, comprising using (41) the virtual machine management application (24) to disable or suspend the operation of the pool (2) of virtual machines (4) before using (44) the erasure application (26) to erase each virtual machine (4) of the pool (2) of virtual machines (4).

8. The method (30) according to any preceding claim, comprising using (41) the virtual machine management application (24) to disable or suspend the operation of the pool (2) of virtual machines (4) before using (42) the virtual machine management application (24) to create the replacement pool of virtual machines on the common virtualization layer.

9. The method (30) according to any preceding claim, comprising enabling or initiating (48) the operation of the replacement pool of virtual machines.

10. The method (30) according to any preceding claim, wherein the pool (2) of virtual machines (4) comprises a pool of virtual desktops and wherein the virtual machine management application (24) comprises a virtual desktop management application or virtual desktop infrastructure software.

11. A computer program which, when executed by a processing resource (20) of a data eraser apparatus (6), causes the data eraser apparatus (6) to perform the method (30) for securely erasing and replacing a pool (2) of virtual machines (4) according to any preceding claim.

12. A data eraser apparatus (6) for securely replacing a pool (2) of virtual machines (4), wherein the data eraser apparatus (6) is configured to perform the method (30) for securely erasing and replacing a pool (2) of virtual machines (4) according to any one of claims 1 to 10.

13. The data eraser apparatus (6) as claimed in claim 12, comprising a processing resource (20) which is configured to control the data eraser apparatus (6) so as to perform the method (30) for securely erasing and replacing a pool (2) of virtual machines (4) according to any one of claims 1 to 10.

## Patentansprüche

1. Computerimplementiertes Verfahren (30) zum sicheren Löschen und Ersetzen eines Pools (2) virtueller Maschinen (4), wobei die virtuellen Maschinen (4) des Pools (2) virtueller Maschinen (4) auf einer gemeinsamen Virtualisierungsschicht implementiert sind und von einer gemeinsamen Anwendung (24) zur Verwaltung von virtuellen Maschinen verwaltet werden, und wobei das Verfahren umfasst:
Verwenden (32) der Anwendung (24) zur Verwaltung von virtuellen Maschinen, um einen Ersatzpool virtueller Maschinen auf der gemeinsamen Virtualisierungsschicht zu erstellen, wobei der Ersatzpool virtueller Maschinen die gleiche Konfiguration und/oder die gleichen Einstellungen wie der Pool (2) virtueller Maschinen (4) aufweist;
Verwenden (34) einer Löschanwendung (26), um jede virtuelle Maschine (4) des Pools (2) virtueller Maschinen (4) zu löschen, wobei die Löschanwendung (26) unabhängig von der Anwendung (24) zur Verwaltung von virtuellen Maschinen ausgeführt werden kann; und
Verwenden (36) der Anwendung (24) zur Verwaltung von virtuellen Maschinen, um den Pool (2) virtueller Maschinen (4) zu löschen.

2. Verfahren (30) nach Anspruch 1, wobei Verwenden (34) der Löschanwendung (26), um jede virtuelle Maschine (4) des Pools (2) virtueller Maschinen (4) zu löschen, Löschen mindestens einer der folgenden Entitäten umfasst, die jeder virtuellen Maschine (4) des Pools (2) virtueller Maschinen (4) zugeordnet sind: ein oder mehrere Gastbetriebssysteme; eine oder mehrere Systemdateien; eine oder mehrere Anwendungen; oder gespeicherte Daten.

3. Verfahren (30) nach Anspruch 1 oder 2, wobei Verwenden (34) der Löschanwendung (26), um jede virtuelle Maschine (4) des Pools (2) virtueller Maschinen (4) zu löschen, Löschen von gespeicherten Daten, die jeder virtuellen Maschine (4) des Pools (2) virtueller Maschinen (4) zugeordnet sind, und zusätzlich dazu Löschen mindestens einer der folgenden Entitäten umfasst: eine oder mehrere Gastbetriebssysteme, die jeder virtuellen Maschine (4) des Pools (2) virtueller Maschinen (4) zugeordnet sind, eine oder mehrere Systemdateien, die jeder virtuellen Maschine (4) des Pools (2) virtueller Maschinen (4) zugeordnet sind, oder eine oder mehrere Anwendungen, die jeder virtuellen Maschine (4) des Pools (2) virtueller Maschinen (4) zugeordnet sind.

4. Verfahren (30) nach einem vorstehenden Anspruch, wobei Verwenden (34) der Löschanwendung (26), um jede virtuelle Maschine (4) des Pools (2) virtueller Maschinen (4) zu löschen, Generieren eines Löschverifizierungsberichts, der Daten enthält, die den Grad, Umfang und/oder erfolgreichen Abschluss der Löschung jeder virtuellen Maschine (4) des Pools (2) virtueller Maschinen (4) angeben, umfasst, sobald die Löschung jeder virtuellen Maschine (4) des Pools (2) virtueller Maschinen (4) abgeschlossen ist.

5. Verfahren (30) nach einem vorstehenden Anspruch, wobei Verwenden (32) der Anwendung (24) zur Verwaltung von virtuellen Maschinen, um den Ersatzpool virtueller Maschinen auf der gemeinsamen Virtualisierungsschicht zu erstellen, Verwenden (32) der Anwendung (24) zur Verwaltung von virtuellen Maschinen umfasst, um den Pool (2) virtueller Maschinen (4) auf der gemeinsamen Virtualisierungsschicht zu duplizieren.

6. Verfahren (30) nach einem der Ansprüche 1 bis 4, wobei Verwenden (32) der Anwendung (24) zur Verwaltung von virtuellen Maschinen, um den Ersatzpool virtueller Maschinen auf der gemeinsamen Virtualisierungsschicht zu erstellen, umfasst:
Speichern der Konfiguration und/oder Einstellungen des Pools (2) virtueller Maschinen (4) bei einem ersten Mal; und
Verwenden der Anwendung (24) zur Verwaltung von virtuellen Maschinen, um den Ersatzpool virtueller Maschinen auf der gemeinsamen Virtualisierungsschicht bei einem zweiten Mal, das später stattfindet als das erste Mal, mit derselben Konfiguration und/oder denselben Einstellungen wie der Pool (2) virtueller Maschinen (4) zu erstellen.

7. Verfahren (30) nach einem vorstehenden Anspruch, das vor Verwenden (44) der Löschanwendung (26), um jede virtuelle Maschine (4) des Pools (2) virtueller Maschinen (4) zu löschen, Verwenden (41) der Anwendung (24) zur Verwaltung von virtuellen Maschinen umfasst, um den Betrieb des Pools (2) virtueller Maschinen (4) zu deaktivieren oder anzuhalten.

8. Verfahren (30) nach einem vorstehenden Anspruch, das vor dem Verwenden (42) der Anwendung (24) zur Verwaltung von virtuellen Maschinen, um den Ersatzpool virtueller Maschinen auf der gemeinsamen Virtualisierungsschicht zu erstellen, Verwenden (41) der Anwendung (24) zur Verwaltung von virtuellen Maschinen umfasst, um den Betrieb des Pools (2) virtueller Maschinen (4) zu deaktivieren oder anzuhalten.

9. Verfahren (30) nach einem vorstehenden Anspruch, das Aktivieren oder Initiieren (48) des Betriebs des Ersatzpools virtueller Maschinen umfasst.

10. Verfahren (30) nach einem vorstehenden Anspruch, wobei der Pool (2) virtueller Maschinen (4) einen Pool virtueller Desktops umfasst, und wobei die Anwendung (24) zur Verwaltung von virtuellen Maschinen eine Anwendung zur Verwaltung von virtuellen Desktops oder eine Software für die Infrastruktur von virtuellen Desktops umfasst.

11. Computerprogramm, das, wenn es von einer Verarbeitungsressource (20) einer Datenlöscheinrichtung (6) ausgeführt wird, bewirkt, dass die Datenlöscheinrichtung (6) das Verfahren (30) zum sicheren Löschen und Ersetzen eines Pools (2) virtueller Maschinen (4) nach einem vorstehenden Anspruch durchführt.

12. Datenlöscheinrichtung (6) zum sicheren Ersetzen eines Pools (2) virtueller Maschinen (4), wobei die Datenlöscheinrichtung (6) so konfiguriert ist, dass sie das Verfahren (30) zum sicheren Löschen und Ersetzen eines Pools (2) virtueller Maschinen (4) nach einem der Ansprüche 1 bis 10 durchführt.

13. Datenlöscheinrichtung (6) nach Anspruch 12, die eine Verarbeitungsressource (20) umfasst, die so konfiguriert ist, dass sie die Datenlöscheinrichtung (6) steuert, um das Verfahren (30) zum sicheren Löschen und Ersetzen eines Pools (2) virtueller Maschinen (4) nach einem der Ansprüche 1 bis 10 durchzuführen.

## Revendications

1. Procédé informatique (30) d'effacement et de remplacement sécurisés d'un groupe (2) de machines virtuelles (4), dans lequel les machines virtuelles (4) du groupe (2) de machines virtuelles (4) sont mises en œuvre sur une couche de virtualisation commune et sont gérées par une application de gestion de machines virtuelles commune (24), et dans lequel le procédé comprend :
l'utilisation (32) de l'application de gestion de machines virtuelles (24) pour créer un groupe de remplacement de machines virtuelles sur la couche de virtualisation commune, dans laquelle ce groupe de remplacement de machines virtuelles présente la même configuration et/ou les mêmes paramètres que le groupe (2) de machines virtuelles (4) ;
l'utilisation (34) d'une application d'effacement (26) pour effacer chaque machine virtuelle (4) du groupe (2) de machines virtuelles (4), dans laquelle l'application d'effacement (26) est exécutable indépendamment de l'application de gestion de machines virtuelles (24) ; et
l'utilisation (36) de l'application de gestion de machines virtuelles (24) pour supprimer le groupe (2) de machines virtuelles (4).

2. Procédé (30) selon la revendication 1, dans lequel l'utilisation (34) de l'application d'effacement (26) pour effacer chaque machine virtuelle (4) du groupe (2) de machines virtuelles (4) comprend l'effacement d'au moins une des entités suivantes associées à chaque machine virtuelle (4) du groupe (2) de machines virtuelles (4) : un ou plusieurs systèmes d'exploitation invités ; un ou plusieurs fichiers système ; une ou plusieurs applications ; ou des données stockées.

3. Procédé (30) selon la revendication 1 ou 2, dans lequel l'utilisation (34) de l'application d'effacement (26) pour effacer chaque machine virtuelle (4) du groupe (2) de machines virtuelles (4) comprend l'effacement des données stockées associées à chaque machine virtuelle (4) du groupe (2) de machines virtuelles (4) et, en outre, l'effacement d'au moins une des entités suivantes : un ou plusieurs systèmes d'exploitation invités associés à chaque machine virtuelle (4) du groupe (2) de machines virtuelles (4), un ou plusieurs fichiers système associés à chaque machine virtuelle (4) du groupe (2) de machines virtuelles (4), ou une ou plusieurs applications associées à chaque machine virtuelle (4) du groupe (2) de machines virtuelles (4).

4. Procédé (30) selon une quelconque revendication précédente, dans lequel l'utilisation (34) de l'application d'effacement (26) pour effacer chaque machine virtuelle (4) du groupe (2) de machines virtuelles (4) comprend la génération d'un rapport de vérification d'effacement contenant des données indicatives du degré, de l'étendue et/ou de l'achèvement réussi de l'effacement de chaque machine virtuelle (4) du groupe (2) de machines virtuelles (4) une fois l'effacement de chaque machine virtuelle (4) du groupe (2) de machines virtuelles (4) terminé.

5. Procédé (30) selon une quelconque revendication précédente, dans lequel l'utilisation (32) de l'application de gestion de machines virtuelles (24) pour créer le groupe de remplacement de machines virtuelles sur la couche de virtualisation commune comprend l'utilisation (32) de l'application de gestion de machines virtuelles (24) pour dupliquer le groupe (2) de machines virtuelles (4) sur la couche de virtualisation commune.

6. Procédé (30) selon l'une quelconque des revendications 1 à 4, dans lequel l'utilisation (32) de l'application de gestion de machines virtuelles (24) pour créer le groupe de remplacement de machines virtuelles sur la couche de virtualisation commune comprend :
le stockage de la configuration et/ou des paramètres du groupe (2) de machines virtuelles (4) lors d'une première configuration ; et
l'utilisation de l'application de gestion des machines virtuelles (24) pour créer le groupe de remplacement de machines virtuelles sur la couche de virtualisation commune avec la même configuration et/ou les mêmes paramètres comme le groupe (2) de machines virtuelles (4) à un deuxième moment qui est plus tard que le premier.

7. Procédé (30) selon une quelconque revendication précédente, comprenant l'utilisation (41) de l'application de gestion de machines virtuelles (24) pour désactiver ou suspendre le fonctionnement du groupe (2) de machines virtuelles (4) avant d'utiliser (44) l'application d'effacement (26) pour effacer chaque machine virtuelle (4) du groupe (2) de machines virtuelles (4).

8. Procédé (30) selon une quelconque revendication précédente, comprenant l'utilisation (41) de l'application de gestion de machines virtuelles (24) pour désactiver ou suspendre le fonctionnement du groupe (2) de machines virtuelles (4) avant d'utiliser (42) l'application de gestion de machines virtuelles (24) pour créer le groupe de remplacement de machines virtuelles sur la couche de virtualisation commune.

9. Procédé (30) selon une quelconque revendication précédente, comprenant l'activation ou le lancement (48) du fonctionnement du groupe de remplacement de machines virtuelles.

10. Procédé (30) selon une quelconque revendication précédente, dans lequel le groupe (2) de machines virtuelles (4) comprend un groupe de machines virtuelles et dans lequel l'application de gestion de machines virtuelles (24) comprend une application de gestion de machines virtuelles ou un logiciel d'infrastructure de machines virtuelles.

11. Programme informatique qui, lorsqu'il est exécuté par une ressource de traitement (20) d'un appareil d'effacement de données (6), amène l'appareil d'effacement de données (6) à exécuter le procédé (30) d'effacement et de remplacement sécurisés d'un groupe (2) de machines virtuelles (4) selon une quelconque revendication précédente.

12. Appareil d'effacement de données (6) pour remplacer en toute sécurité un groupe (2) de machines virtuelles (4), dans lequel l'appareil d'effacement de données (6) est configuré pour exécuter le procédé (30) d'effacement et de remplacement en toute sécurité d'un groupe (2) de machines virtuelles (4) selon l'une quelconque des revendications 1 à 10.

13. Appareil d'effacement de données (6) tel que revendiqué dans la revendication 12, comprenant une ressource de traitement (20) configurée pour commander l'appareil d'effacement de données (6) afin d'exécuter le procédé (30) d'effacement et de remplacement sécurisés d'un groupe (2) de machines virtuelles (4) selon l'une quelconque des revendications 1 à 10.
